# EUROPÄISCHE PATENTANMELDUNG

(11) **EP 3 273 641 A1**
(43) Veröffentlichungstag der Anmeldung: **24.01.2018**
(21) Anmeldenummer: 16180793.8
(22) Anmeldetag: 22.07.2016
(51) Int. Cl.: H04L 12/40, H04L 12/46

(54) **ÜBERMITTLUNG VON APPLIKATIONSSPEZIFISCHEN PAKETEN**

(71) Anmelder: Siemens Aktiengesellschaft, 80333 München (DE)
(72) Erfinder: STEINDL, Günter, 92284 Poppenricht (DE)

(57) **Zusammenfassung**

Die Erfindung betrifft ein Verfahren zur Übermittlung von applikationsspezifischen Paketen (P1, ..., Pn) in einem Netzwerk eines industriellen Automatisierungssystems, wobei in dem Netzwerk virtuelle Netzwerke (VLAN) erstellbar sind. Um ein Verfahren anzugeben, das es effizient ermöglicht, unter Beibehaltung der gewohnten Funktionalität von applikationsspezifischen Protokollen deren Funktionen auf neuen Generationen von Standard-Hardware zur Verfügung zu stellen werden folgende Schritte vorgeschlagen:
• Klassifizieren der applikationsspezifischen Pakete (P1, ..., Pn) in zumindest isochrone Klassen (IRT), Echtzeitklassen (RT) sowie Basisklassen (PN),
• Breitstellen mindestens eines virtuellen Netzwerks (VLAN) mit einem Netzwerkidentifikator (VID1, ..., VIDn) pro Klasse (IRT, RT, PN) und
• Übertragen der applikationsspezifischen Pakete (P1, ..., Pn) über das gemäß ihrer Klasse (RT, IRT, PN) gewählte virtuelle Netzwerk (VLAN) mit dem entsprechenden Netzwerkidentifikator (VID1, ..., VIDn).

## Beschreibung

Die Erfindung betrifft ein Verfahren zur Übermittlung von applikationsspezifischen Paketen in einem Netzwerk, wobei in dem Netzwerk virtuelle Netzwerke erstellbar sind. Die Erfindung betrifft weiter ein Kommunikationsgerät und ein Endgerät zur Kommunikation mittels eines erfindungsgemäßen Verfahrens.

Ein derartiges Verfahren, sowie die dazugehörigen Endgeräte und Switches kommen beispielsweise in der industriellen Automatisierung zum Einsatz. Applikationsspezifische Pakete können dabei beispielsweise PROFINET-Pakete sein. Das Netzwerk kann dabei beispielsweise ein Netzwerk auf Ethernet-Basis sein. Die Pakete werden im Layer 2 des OSI-Schichtenmodells auch oft als Frames oder Rahmen bezeichnet. In dem Netzwerk sollen dabei virtuelle Netzwerke erstellbar sein. Virtuelle Netzwerke übertragen Pakete über ein Netzwerk, im Wesentlichen im Layer 2, und auf Basis einer Adresse, insbesondere auf Basis der MAC-Adresse des sendenden und des empfangenden Geräts. Diese virtuellen Netzwerke bieten die Möglichkeit ohne aufwändige Netzwerkhardware mehrere Netzwerke aufzuspannen, einzelne Teilnehmer auch mehreren Netzwerken zuzuordnen und diese Netzwerke wiederum mehreren Verwendungszwecken zuzuführen. Kommende Standards im Bereich der virtuellen Netzwerke ermöglichen es nun, auch zeitkritische oder TSN-Pakete über Standard-LANs (z.B. via Ethernet) auch unter Beibehaltung des von applikationsspezifischen Protokollen gewohnten Determinismus zu verschicken. Virtuelle Netzwerke sind u.a. in IEEE 802.1Q standardisiert. Um mit Standard-Hardware die hohen Anforderungen von applikationsspezifischen Protokollen zur Übertragung von applikationsspezifischen Paketen zu erfüllen, war es bisher in der Regel nötig, die Architektur dieser Standard-Hardware zu verändern und damit zumindest einige Standardfunktionalitäten zu verlieren. Mit der neuen Generation von Hardware ist es nun möglich applikationsspezifische Pakete über Netzwerke, auch mit Standardhardware, zu übertragen.

Es ist Aufgabe der Erfindung, ein Verfahren anzugeben, das es effizient ermöglicht, unter Beibehaltung der gewohnten Funktionalität von applikationsspezifischen Protokollen deren Funktionen auf neuen Generationen von Standard-Hardware zur Verfügung zu stellen.

Die Aufgabe wird durch die im Anspruch 1 angegeben Merkmale gelöst. Dort wird ein Verfahren zur Übermittlung von applikationsspezifischen Paketen in einem Netzwerk eines industriellen Automatisierungssystems angegeben, wobei in dem Netzwerk virtuelle Netzwerke erstellbar sind,
umfassend die Schritte:
- Klassifizieren der applikationsspezifischen Pakete in zumindest isochrone Klassen, Echtzeitklassen sowie Basisklassen,
- Breitstellen mindestens eines virtuellen Netzwerks mit einem Netzwerkidentifikator pro Klasse,
- Übertragen der applikationsspezifischen Pakete über das gemäß ihrer Klasse gewählte virtuelle Netzwerk mit dem entsprechenden Netzwerkidentifikator.

Das Klassifizieren der applikationsspezifischen Pakete kann dabei durch jegliche Geräte geschehen, deren Kommunikationseinrichtungen zum Klassifizieren von applikationsspezifischen Paketen vorgesehen sind. Dies können beispielsweise Geräte sein, die selbst, bzw. deren Kommunikationsschnittstellen, ihre Pakete entsprechend klassifizieren. Auch Geräte, die eine derartige Funktion nicht besitzen, können an der applikationsspezifischen und klassifizierten Kommunikation teilnehmen indem sie an einem Port bzw. einer Schnittstelle angeschlossen sind, der wiederum für die Endgeräte die Klassifizierung vornimmt. Derartige Ports können beispielsweise von Switches oder Bridges bereitgestellt werden.

Das Bereitstellen eines virtuellen Netzwerks kann je nach Konfiguration und Ausgestaltung in verschiedenen Endgeräten durchgeführt werden. Die Konfiguration des virtuellen Netzwerks kann dabei z.B. durch die Endgeräte selbst, durch eine zentrale Stelle oder eine übergeordnete zentrale Instanz geschehen. Beispielsweise ist denkbar, dass eine EngineeringSoftware bereits automatisch bzw. nach vorgebbaren Regeln die notwendigen virtuellen Netzwerke konfiguriert und entsprechend auf die Geräte im Netzwerk verteilt. Die Klassen definieren dabei die Anforderungen an die Kommunikation, die mittel dem applikationsspezifischen Paketen realisiert werden soll.

Die Basisklasse kommt dabei in der Regel zur Übertragung von Engineering-Daten und weiteren Daten, deren Übertragung nicht zeitkritisch ist, zum Einsatz.

Mit der Echtzeitklasse, auch Realtime-Klasse genannt, können zyklische Daten übertragen werden, wie es aus Feldbussen bekannt ist und beispielsweise bei PROFIBUS oder PROFINET realisiert ist. Insbesondere ist die Echtzeitklasse zur Kommunikation zwischen Steuerungen und Sensoren und Aktoren vorgesehen, vor allem wenn die Sensoren und Aktoren z.B. aus konstruktiven Gründen nicht zur direkten Verbindung mit der Steuerung vor Ort sind, sondern eine Kommunikation über einen BUS oder ein Netzwerk nötig ist. Auch eine azyklische Datenübertragung in der Echtzeitklasse ist durch so genannte Lese- und/oder Schreibdienste möglich. Hier wären beispielsweise Diagnoseinformationen und Logbucheinträge zu nennen.

Mit der Isochronen-Klasse ist eine taktsynchrone Übertragung von Daten mit einer hohen Taktrate und einer hohen Jitter-Genauigkeit möglich. Dies ist insbesondere bei Motion-Control-Anwendungen gefordert. Die einzelnen Klassen können sich dabei unter anderem auf Basis ihrer Taktrate und ihrer Jitter-Genauigkeit unterscheiden.

Es werden schließlich die applikationsspezifischen Pakete über das gemäß ihrer Klasse gewählte virtuelle Netzwerk mit dem entsprechenden Netzwerkidentifikator übertragen. So ist sichergestellt, dass die applikationsspezifischen Pakete über das virtuelle Netzwerk mit der richtigen Priorität übertragen werden.

In einer weiteren Ausführungsform ist das Netzwerk ein Netzwerk auf Ethernet-Basis. Dies ist vorteilhaft, da so Standardisierte Hardware und Controller verwendet werden können und so eine erhebliche Kostenersparnis zu erreichen ist.

In einer weiteren besonders vorteilhaften Ausführungsform wird zur Initialisierung einer applikationsspezifischen Verbindung einer der isochronen Klassen und/oder Echtzeitklassen ein Initialisierungspaket über ein virtuelles Netzwerk übertragen, das keiner der isochronen Klassen und/oder Echtzeitklassen zugeordnet ist. Auf diese Weise können sogenannte Fast-Startup-Features aufrecht erhalten werden. Es wird beispielsweise ein "Hello-Paket" von einem neuen Endgerät über ein nicht klassifiziertes virtuelles Netzwerk versandt um anschließend direkt eine Konfiguration für die Kommunikation über die klassifizierten Netzwerke durchführen zu können. Es ist ebenso denkbar, dass alternativ oder redundant über die Basisklasse und/oder über ein nicht klassifiziertes Netzwerk ein solches Initialisierungspaket übertragen wird.

In einer weiteren besonders vorteilhaften Ausführungsform wird zur Initialisierung einer applikationsspezifischen Verbindung einer der isochronen Klassen und/oder Echtzeitklassen ein Initialisierungspaket über ein weiteres virtuelles Netzwerk übertragen. Das weitere virtuelle Netzwerk existiert zusätzlich zu den virtuellen Netzwerken der applikationsspezifischen Klassen. Es kann sich dabei also um ein nicht klassifiziertes virtuelles Netzwerk handeln, das zur Übertragung von nicht applikationsspezifischen Paketen vorgesehen ist. Hierbei können jegliche Daten übertragen werden, die über herkömmliche Netzwerke übertragen werden können, z.B. den sogenannten "best effort traffic". Weiterhin kann ein weiteres virtuelles Netzwerk zur Übertragung von Initialisierungspaketen und/oder applikationsunabhängigen Paketen bereitgestellt werden. Dieses weitere virtuelle Netzwerk kann Verbindungen zwischen allen Teilnehmern des Netzwerks zur Verfügung stellen, die aber außerhalb der klassifizierten virtuellen Netzwerke hergestellt werden. Beispielsweise könnten Endgeräte so konfiguriert werden, dass sie nur klassifizierte Verbindungen und zusätzlich Initialisierungspakete über weitere virtuelle Netzwerke zulassen. Alle weiteren Pakete könnten dann z.B. Sicherheitsgründen verworfen werden.

Besonders vorteilhaft ist es, wenn den virtuellen Netzwerken der isochronen Klasse und der Echtzeitklasse jeweils mindestens ein Filteridentifikator zugewiesen wird. Jedem virtuellen Netzwerk der genannten Klassen wird ein Filteridentifikator, auch "filtering database identifier" FID bzw. FDB ID genannt, zugewiesen. Der Filteridentifikator weist dem virtuellen Netzwerk eine Filter-Datenbank, auch "filter database" FDB genannt, zu, in der die nutzbare Topologie hinterlegt ist. Auf diese Weise werden den virtuellen Netzwerken physische Komponenten mit realen Ports und physischen Verbindungen zugweisen. Indem jede der isochronen Klassen und der Echtzeitklasse jeweils einen Filteridentifikator zugewiesen bekommt, ist es möglich für jede der Klassen eigene Ressourcen zu reservieren. Dies ermöglicht eine weiter verbesserte Bereitstellung der applikationsspezifischen Funktionen.

In einer weiteren vorteilhaften Ausgestaltung wird für jedes virtuelle Netzwerk der Klassen isochrone Klasse und/oder Echtzeitklasse ein redundantes virtuelles Netzwerk mit einem Netzwerkidentifikator bereitgestellt. Durch das Bereitstellen von redundanten virtuellen Netzwerken für die isochrone Klasse und/oder Echtzeitklasse wird eine höhere Übertragungssicherheit für applikationsspezifische Pakete durch die Redundanz erreicht. Es können so auch physische Ressourcen für die redundante Übertragung reserviert werden. Es ist auch möglich den redundanten virtuellen Netzwerken einen Filteridentifikator zuzuweisen.

In einer weiteren Ausgestaltung wird jedem redundanten virtuellen Netzwerk der isochronen Klasse und/oder der Echtzeitklasse je ein Filteridentifikator zugewiesen. So kann auch die Übertragung von redundanten Paketen mit einer den Filteridentifikatoren zugewiesenen Topologie optimal durchgeführt werden. Es ist denkbar, dass jedes klassifizierte virtuelle Netzwerk und deren redundante virtuelle Netzwerke einen eigenen Filteridentifikator und einen eigenen Netzwerkidentifikator aufweisen. Auf diese Weise ist eine maximale Kontrolle über den Traffic bzw. das Übermitteln der Pakete möglich.

In einer besonders vorteilhaften Ausführungsform nimmt eine übergeordnete Instanz, eine Konfiguration der virtuellen Netzwerke von zumindest einem Gerät, das am Netzwerk teilnimmt, vor. Die übergeordnete Instanz kann beispielsweise eine Engineeringsoftware sein, in der ein Automatisierungssystem und dessen Netzwerk und Kommunikationsverbindungen geplant und projektiert werden. Die übergeordnete Instanz kann anschließend selbsttätig oder durch weitere vorgebbare Konfigurationsschritte die notwendige Einrichtung der virtuellen Netzwerke auf den Geräten im Netzwerk vornehmen. Es ist hier auch denkbar, dass nur ein zentraler Switch oder ein Endgerät eingerichtet wird, die wiederum ihre Konfiguration an weitere Geräte weitergeben.

Weiterhin sind folgende Ergänzungen mit der Erfindung kombinierbar und bewegen sich innerhalb des erfinderischen Gedanken. Die TSN Domain wird durch "Priority Remapping" am Boundary Port geschützt. D.h. alle Pakete werden inspiziert und bei Bedarf mit einem neuen TCI.PCP Wert versehen bzw. getaggt. Es existiert die Möglichkeit eine automatische Boundary durch MSRP oder LLDP einzurichten. Mit Hilfe der PeerToPeer Protokolle MSRP oder LLDP können Nachbarn ihre TSN-DomainID austauschen. Bei gleicher Domain liegt keine Boundary vor, bei unterschiedlicher Domain liegt eine Boundary vor. Die FDB zu VLAN Zuordnung kann über eine FID geschehen. Die FDB-Instanz kann also über die FID (FDB ID) identifiziert werden. Einer FID ist ein Tree, also eine nutzbare Topologie, zugeordnet.

Virtuelle Netzwerke VLAN müssen eingerichtet werden. Dabei wird auch festgelegt, ob der VID eines VLANs eine eigene FID zugeordnet wird. Die FID ist die Verbindung zwischen den VIDs. Gibt es mehrere VIDs im VLAN, dann ist die FID die Klammer. Einer FID wiederum wird eine Topologie (auch Tree genannt) zugeordnet. Wenn keine Loop-Prevention in einer FID genutzt wird, so bleiben alle Ports dieser VLAN Topologie verfügbar.

Ressourcen werden oftmals Herstellerspezifisch zugeordnet, meist werden garantierte Ressourcen per Queue zugeordnet und es steht ein zusätzlicher globaler Pool zur Verfügung falls die garantierten Ressourcen verbraucht sind.

In einem Netzwerk, in dem Pakete versendet werden, die weder PROFINET noch TSN-Kommunikation zuordenbar sind, erfolgt über dies über ein weiteres virtuelles Netzwerk - auch Default VLAN genannt. Das Default-VLAN ist folglich nicht klassifiziert.

Die Aufgabe wird weiterhin durch ein Kommunikationsgerät zur Durchführung eines erfindungsgemäßen Verfahrens gelöst. Das Kommunikationsgerät weist dazu mindestens eine Kommunikationssteuerungseinheit sowie mehrere Schnittstellen auf, wobei die Kommunikationssteuerungseinheit zur Klassifizierung von applikationsspezifischen Paketen in zumindest isochrone Klassen, Echtzeitklassen und/oder Basisklassen und zum Senden und/oder Empfangen von applikationsspezifischen Paketen über ein virtuelles Netzwerk ausgebildet ist. Das Kommunikationsgerät kann dabei ein Switch oder eine Bridge zur Industriellen Kommunikation mittels eines applikationsspezifischen Protokolls sein. Es ist denkbar, dass auch zukünftige Standardswitches und -bridges mit dem erfindungsgemäßen Verfahren eine applikationsspezifische Kommunikation realisieren können.

Die Aufgabe wird weiterhin durch ein Endgerät zur Kommunikation mittels eines erfindungsgemäßen Verfahrens, aufweisend mindestens einen Port und mindestens eine Kommunikationsschnittstelle, gelöst. Dazu ist die Kommunikationsschnittstelle zur Klassifizierung von applikationsspezifischen Paketen in zumindest isochrone Klassen, Echtzeitklassen und/oder Basisklassen und zum Senden und/oder Empfangen von applikationsspezifischen Paketen über ein virtuelles Netzwerk ausgebildet. Die Kommunikationsschnittstelle kann z.B. ein ASIC, der die Pakete klassifiziert, mit einem entsprechenden VLAN Tag versieht und versendet sein. In Zukunft sind auch Ethernet Chips der jeweilig neuesten Generation einsetzbar. Das Endgerät kann dabei sowohl eine Steuerung als auch Motoren, Umrichter, Sensoren und weitere Aktoren sein. Hier sind jegliche Geräte denkbar, die im industriellen Umfeld mit einer entsprechenden Kommunikationsschnittstelle zur Kommunikation mit einem erfindungsgemäßen Verfahren ausgebildet sind. Auch Nachrüstlösungen sind durch den Tausch von Kommunikationsschnittstellen denkbar.

Im Folgenden wird die Erfindung anhand der in den Figuren dargestellten Ausführungsbeispiele näher beschrieben und erläutert. Es zeigen:
FIG 1 eine schematische Darstellung des Verfahrens und
FIG 2 ein Netzwerk mit Geräten zur Durchführung des Verfahrens.

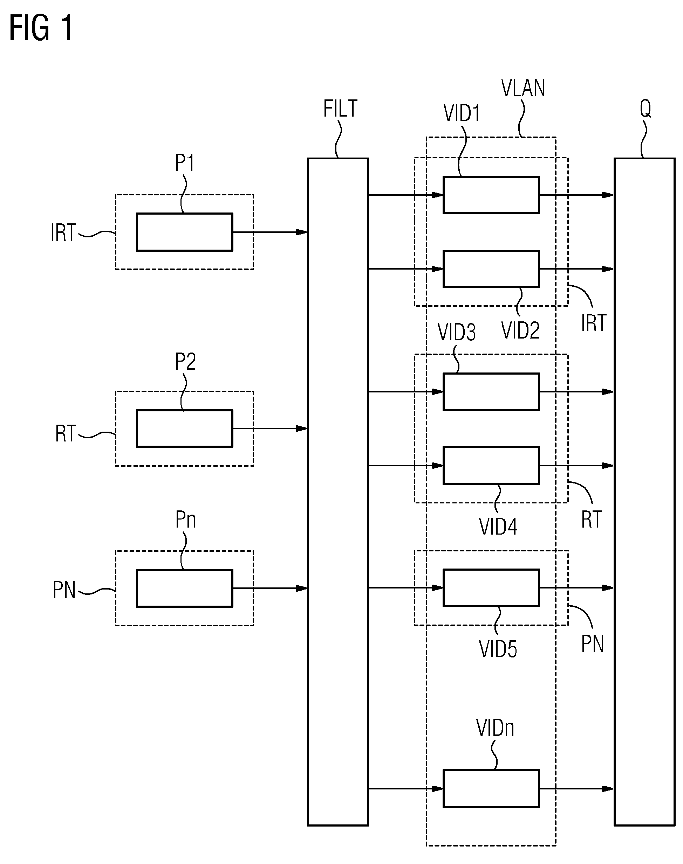

FIG 1 zeigt eine schematische Darstellung des Verfahrens, wie es z.B. in einem Switch für die industrielle Anwendung mit einem applikationsspezifischen Protokoll, z.B. dem PROFINET-Protokoll, zur Anwendung kommen kann. Zu sehen sind drei applikationsspezifische Pakete P1, P2, Pn, die jeweils Klassen IRT, RT, PN isochrone Klasse IRT, Echtzeitklasse RT und Basisklasse PN zugeordnet sind. Das Klassifizieren der Pakete P1, P2, Pn kann auf vielfältige Arten und Weisen geschehen. Es ist beispielsweise denkbar, dass Geräte, die mit einer bestimmten Klasse IRT, RT, PN kommunizieren, ihre Pakete P1, P2, Pn direkt mit einem entsprechenden Kenner (auch Tag genannt) klassifizieren. Es ist denkbar, dass einzelne Geräte mittels mehrerer Klassen IRT, RT, PN kommunizieren. Es ist ebenso denkbar, dass Switches anhand deren Ports die Klassifizierung der daran angeschlossenen Geräte für die Geräte, die eine solche Funktion nicht aufweisen, vornehmen. Anhand eines Filters FILT werden die klassifizierten Pakete P1, P1, Pn den Klassen IRT, RT, PN entsprechenden virtuellen Netzwerken VLAN zugeordnet. Der Filter kann dazu weiterhin hier nicht gezeigte Filteridentifikatoren FID1, ..., FIDn auswerten, um eine Zuordnung zu den virtuellen Netzwerken VLAN durchzuführen und eine dahinterliegende physische Topologie oder Ressourcen zuzuordnen. Die virtuellen Netzwerke VLAN weisen jeweils einen Netzwerkidentifikator VID1, ..., VIDn auf.

In FIG 1 sind für die isochrone Klasse IRT die virtuellen Netzwerke VLAN mit den Netzwerkidentifikatoren VID1 und VID2 vorgesehen. Hier ist es vorgesehen, dass für die isochrone Klasse IRT das virtuelle Netzwerk VLAN mit dem Netzwerkidentifikator VID1 eine Redundanz zugewiesen bekommt, die hier mittels des virtuellen Netzwerks VLAN mit dem Identifikator VID2 ausgebildet ist. Analog hat die Echtzeitklasse RT ebenfalls ein virtuelles Netzwerk VLAN mit dem Identifikator VID3 sowie das dazu redundante virtuelle Netzwerk VLAN mit dem Identifikator VID4. Die Basisklasse PN hat nur ein virtuelles Netzwerk VLAN mit dem Identifikator VID5, da dort keine Redundanz gefordert ist. Außerdem existiert das virtuelle Netzwerk VLAN mit dem Identifikator VIDn, das darstellen soll, dass außerhalb der applikationsspezifischen virtuellen Netzwerke VLAN auch ein Standard-VLAN (auch Default-VLAN) existieren kann, das Pakete, die nicht applikationsspezifisch sind, auch über ein solches VLAN übertragen werden können. Auch Pakete, die zwar im generellen der Applikation zugeordnet werden können, aber keine der speziellen Anforderungen der Applikation genügen müssen sind hier denkbar.

Der Übersichtlichkeit halber wurde die Netzwerkressourcenplanung und die Ressourcenzuweisung unter dem Block Q zusammengefasst. Dort kann beispielsweise auf Basis der so genannten Tag Control Information TCI in Verbindung mit einem Priority Code Point (PCP oder Benutzer-Prioritätsinformationen) eine Zuweisung zu implementierungsspezifischen Ressourcen durchgeführt werden. Je nach Zuweisung der Ressourcen werden dann entsprechende Queues zugewiesen, um eine Übertragung der Pakete P1, P2, Pn gemäß ihrer Klassen und der dadurch nötigen Priorität, Taktrate und Genauigkeit (Jitter) zu ermöglichen. Es ist hier möglich je nach Implementierung der Queues eine spezifische Anzahl an Sub-Queues vorzusehen. Oftmals sind 8 Prioritäten der Queues vorgesehen, die allerdings eine sehr große Anzahl an untergeordneten Queues (subqueues) erlauben.

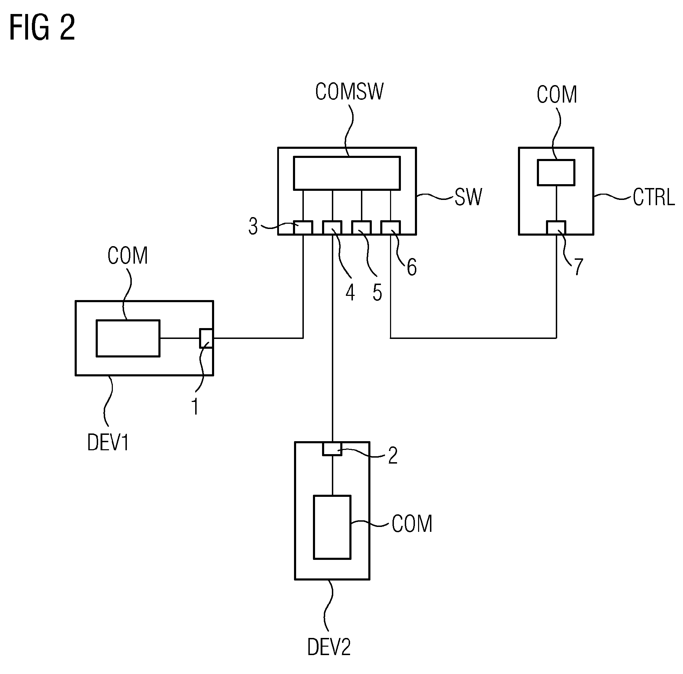

FIG 2 zeigt beispielhaft ein Netzwerk, in dem eine erfindungsgemäße Kommunikation stattfinden kann. Zu sehen sind zwei Endgeräte DEV1, DEV2, die über einen Switch SW miteinander kommunizieren können. An den Switch SW ist weiterhin eine Steuerung CTRL angeschlossen. Alle Verbindungen werden über Ports 1 - 7 hergestellt. Diese Verbindungen können beispielsweise Ethernet-Verbindungen sein, aber auch weitere Netzwerkverbindungen mit Unterstützung von virtuellen Netzwerken VLAN sind denkbar. Die beiden Endgeräte DEV1, DEV2 sind insbesondere Feldgeräte, die beispielsweise mit einer isochronen Echtzeitklasse zyklisch und taktgenau angesteuert und/oder ausgelesen werden. Bei den Endgeräten DEV1, DEV2 kann es sich um Sensoren, Aktoren oder weitere industrielle Geräte handeln. Jedes der Endgeräte DEV1, DEV2 weist eine Kommunikationsschnittstelle COM zur Verbindung mit der Ports 1, 2 mit den Ports 3, 4 am Switch SW auf. Die Kommunikationsschnittstelle COM kann dabei derart ausgebildet und eingerichtet sein, dass sie applikationsspezifische Pakete klassifizieren kann und entsprechend der Klassifizierung über das gewählte virtuelle Netzwerk VLAN Senden oder Empfangen kann. Es ist auch möglich, dass z.B. das Endgerät DEV2 diese Funktionalität nicht aufweist. In diesem Fall ist es möglich, dass das Endgerät DEV2, dessen Port 2 mit dem Port 4 des Switches verbunden ist, trotzdem an der Kommunikation teilnehmen kann, indem eine Kommunikationssteuerungseinheit COMSW des Switches SW die Klassifizierung für das Endgerät DEV2 vornimmt.

Das Steuergerät CTRL weist eine Kommunikationsschnittstelle COM auf. Diese Kommunikationsschnittstelle COM des Steuergeräts CTRL ist beispielsweise derart ausgebildet, dass sie mit den beiden Endgeräten DEV1, DEV2 kommuniziert und diesen Steuerungs- und Regelungsdaten, aber auch Engineeringdaten zur Verfügung stellt. Der Switch ist beispielsweise derart ausgestaltet, dass seine Kommunikationssteuerungseinheit COMSW die virtuellen Netzwerke VLAN gemäß den Klassen IRT, RT, PN zur Verfügung stellt.

Zusammenfassend betrifft die Erfindung ein Verfahren zur Übermittlung von applikationsspezifischen Paketen P1, ..., Pn in einem Netzwerk eines industriellen Automatisierungssystems, wobei in dem Netzwerk virtuelle Netzwerke VLAN erstellbar sind. Um ein Verfahren anzugeben, das es effizient ermöglicht, unter Beibehaltung der gewohnten Funktionalität von applikationsspezifischen Protokollen deren Funktionen auf neuen Generationen von Standard-Hardware zur Verfügung zu stellen werden folgende Schritte vorgeschlagen:
- Klassifizieren der applikationsspezifischen Pakete P1, ..., Pn in zumindest isochrone Klassen IRT, Echtzeitklassen RT sowie Basisklassen PN,
- Breitstellen mindestens eines virtuellen Netzwerks VLAN mit einem Netzwerkidentifikator VID1, ..., VIDn pro Klasse IRT, RT, PN und
- Übertragen der applikationsspezifischen Pakete P1, ..., Pn über das gemäß ihrer Klasse RT, IRT, PN gewählte virtuelle Netzwerk VLAN mit dem entsprechenden Netzwerkidentifikator VID1, ..., VIDn.

## Patentansprüche

1. Verfahren zur Übermittlung von applikationsspezifischen Paketen (P1, ..., Pn) in einem Netzwerk eines industriellen Automatisierungssystems, wobei in dem Netzwerk virtuelle Netzwerke (VLAN) erstellbar sind,
**umfassend die Schritte:**
• Klassifizieren der applikationsspezifischen Pakete (P1, ..., Pn) in zumindest isochrone Klassen (IRT), Echtzeitklassen (RT) sowie Basisklassen (PN),
• Breitstellen mindestens eines virtuellen Netzwerks (VLAN) mit einem Netzwerkidentifikator (VID1, ..., VIDn) pro Klasse (IRT, RT, PN),
• Übertragen der applikationsspezifischen Pakete (P1, ..., Pn) über das gemäß ihrer Klasse (RT, IRT, PN) gewählte virtuelle Netzwerk (VLAN) mit dem entsprechenden Netzwerkidentifikator (VID1, ..., VIDn).

2. Verfahren nach Anspruch 1, wobei das Netzwerk ein Netzwerk auf Ethernet-Basis ist.

3. Verfahren nach einem der vorhergehenden Ansprüche, wobei zur Initialisierung einer applikationsspezifischen Verbindung einer der:
• isochronen Klassen (IRT) und/oder
• Echtzeitklassen (RT)
ein Initialisierungspaket (INI) über ein virtuelles Netzwerk (VLAN) übertragen wird, das keiner der isochronen Klassen (IRT) und/oder Echtzeitklassen (RT) zugeordnet ist.

4. Verfahren nach einem der vorhergehenden Ansprüche, wobei zur Initialisierung einer applikationsspezifischen Verbindung einer der:
• isochronen Klassen (IRT) und/oder
• Echtzeitklassen (RT)
ein Initialisierungspaket (INI) über ein weiteres virtuelles Netzwerk (VLAN) übertragen wird.

5. Verfahren nach einem der vorhergehenden Ansprüche, wobei ein weiteres virtuelles Netzwerk (VLAN) zur Übertragung von Initialisierungspaketen (INI) und/oder applikationsunabhängigen Paketen bereitgestellt wird.

6. Verfahren nach einem der vorhergehenden Ansprüche, wobei den virtuellen Netzwerken (VLAN) der isochronen Klasse (IRT) und der Echtzeitklasse (RT) jeweils mindestens ein Filteridentifikator (FID1, ..., FIDn) zugewiesen wird.

7. Verfahren nach einem der vorhergehenden Ansprüche, wobei für jedes virtuelle Netzwerk (VLAN) der Klassen (IRT, RT, PN) isochrone Klasse (IRT) und/oder Echtzeitklasse (RT) ein redundantes virtuelles Netzwerk (VLAN) mit einem Netzwerkidentifikator (VID1, ..., VIDn) bereitgestellt wird.

8. Verfahren nach einem der vorhergehenden Ansprüche, wobei jedem redundanten virtuellen Netzwerk (VLAN) der isochronen Klasse (IRT) und der Echtzeitklasse (RT) je ein Filteridentifikator (FID1, ..., FIDn) zugewiesen wird.

9. Verfahren nach einem der vorhergehenden Ansprüche, wobei eine übergeordnete Instanz, eine Konfiguration der virtuellen Netzwerke (VLAN) von zumindest einem Gerät, das am Netzwerk teilnimmt, vornimmt.

10. Kommunikationsgerät zur Kommunikation mittels eines Verfahrens nach einem der Ansprüche 1 bis 9 aufweisend mindestens eine Kommunikationssteuerungseinheit (COMSW) sowie mehrere Ports (3, 4, 5, 6), wobei die Kommunikationssteuerungseinheit (COMSW):
- zur Klassifizierung von applikationsspezifischen Paketen (P1, ..., Pn) in zumindest isochrone Klassen (IRT), Echtzeitklassen (RT) und/oder Basisklassen (PN) und
- zum Senden und/oder Empfangen von applikationsspezifischen Paketen (P1, ..., Pn) über ein virtuelles Netzwerk (VLAN) ausgebildet ist.

11. Kommunikationsgerät nach Anspruch 10, wobei dieses als Switch oder Bridge ausgebildet ist.

12. Endgerät zur Kommunikation mittels eines Verfahrens nach einem der Ansprüche 1 bis 9, aufweisend mindestens einen Port (1, 2, 7) und mindestens eine Kommunikationsschnittstelle (COM), die:
- zur Klassifizierung von applikationsspezifischen Paketen (P1, ..., Pn) in zumindest isochrone Klassen (IRT), Echtzeitklassen (RT) und/oder Basisklassen (PN) und
- zum Senden und/oder Empfangen von applikationsspezifischen Paketen (P1, ..., Pn) über ein virtuelles Netzwerk (VLAN) ausgebildet ist.
